# EUROPÄISCHE PATENTANMELDUNG

(11) **EP 2 309 201 A2**
(43) Veröffentlichungstag der Anmeldung: **13.04.2011**
(21) Anmeldenummer: 10186878.4
(22) Anmeldetag: 07.10.2010
(51) Int. Cl.: F24J 2/04, F24J 2/34, F24J 2/51

(54) **Solarbauelement für Solarthermieanlagen, Solarthermieanlage, Verfahren zum Betreiben einer Solarthermieanlage und Teile eines Solarbauelements für Solarthermieanlage**

(30) Priorität: 07.10.2009 DE 102009045466; 13.07.2010 DE 102010036383
(71) Anmelder: Hambrock, Ludger, 46325 Borken (DE)
(72) Erfinder: Hambrock, Ludger, 46325 Borken (DE)
(74) Vertreter: CBDL Patentanwälte

(57) **Zusammenfassung**

Solarbauelement für Solarthermieanlagen mit einem Absorberelement (82) und wenigstens einem mit dem Absorberelement direkt oder indirekt thermisch gekoppelten Rohr (34, 36) für ein fluides Wärmemedium, wobei wenigstens eine feste Isolierung (80) vorzugsweise aus Schaumglas oder Kunststoff, insbesondere einem ausgehärteten Kunststoffschaum, insbesondere aus Polyurethan oder Polyisocyanurat, vorgesehen ist, die im bestimmungsgemäßen Montagezustand das wenigstens eine Rohr (34, 36) relativ zum Absorberelement (82) fixiert.

## Beschreibung

### TECHNISCHES GEBIET DER ERFINDUNG

Die Erfindung betrifft ein Solarbauelement für Solarthermieanlagen, eine Solarthermieanlage, ein Verfahren zum Betreiben einer Solarthermieanlage sowie bestimmte Teile eines Solarbauelements für Solarthermieanlagen.

### HINTERGRUND DER ERFINDUNG

Solarthermieanlagen sind seit langem bekannt. Sie basieren auf dem Grundprinzip, ein fluides Medium in einem Wärmemittelkreislauf zirkulieren und dabei von der Sonne erwärmen zu lassen, wobei das erwärmte Medium dann einen Wärmetauscher durchläuft, in welchem es die aufgenommene thermische Energie an ein anderes Medium insbesondere zur Erwärmung von Heiz-, Frisch- oder Brauchwasser gibt.

Die bekannten Anlagen verwenden in der Regel sogenannte Flachkollektoren, die auf einer Flachseite eines Daches, das im Jahresdurchschnitt die meiste Sonneneinstrahlung erfährt, angebracht werden.

Es hat sich nun gezeigt, daß bestimmte Personenkreise sowohl den finanziellen als auch den konstruktiven Aufwand, der mit bislang bekannten Solarthermieanlagen verbunden ist, aus unterschiedlichen Gründen scheuen. So sind auf Grund der geographischen und/oder baulichen Lage des jeweiligen Hauses herkömmliche Solarthermieanlagen für bestimmte Hausbesitzer wenig attraktiv, da die durch die Nutzung der Sonnenenergie eingesparten Energiekosten in keinem Verhältnis zu den mit der Anschaffung und der Montage einer entsprechenden Solarthermieanlage verbundenen Kosten stehen.

Generell wird davon ausgegangen, daß Solarthermieanlagen gemäß dem Stand der Technik mehr als fünf, nicht selten zehn und mehr Jahre betrieben werden müssen, bevor die eingesparten Energiekosten die für die Anschaffung der Anlage aufgewendeten Kosten übersteigen. In Deutschland liegen zum Zeitpunkt dieser Patentanmeldung in entsprechenden Musterrechnungen die Nutzungszeiträume bis zum sog. Break-even-Punkt meist zwischen 12 und 17 Jahren.

Wenngleich in bestimmten Ländern Hausbesitzer oft viele Jahrzehnte in ihrem Haus wohnen, ist es in anderen Ländern, zum Beispiel den USA, üblich, häufig umzuziehen und Häuser nach drei oder vier Jahren zu verkaufen. Innerhalb von drei oder vier Jahren haben sich aber herkömmliche Solarthermieanlagen generell nicht amortisiert, erhöhen aber auch den Wiederverkaufswert eines Hauses in der Regel nicht im Maße ihres Restwertes. Daher lohnt sich für viele Hausbesitzer die Anschaffung einer solchen Solarthermieanlage nicht.

Ein besonders Problem bei bekannten Solarthermieanlagen ist die Verbindung der sog. Absorberelemente mit den Rohrleitungen für das fluide Medium. Bestehen beide aus demselben Material, z.B. Kupfer, werden sie bislang üblicherweise miteinander verschweißt, was jedoch aufwendig und teuer ist. Bestehen sie aus unterschiedlichen Materialien, ist das Verbinden aufgrund der dann in der Regel gegebenen unterschiedlichen Wärmeausdehnungskoeffizienten ein noch größeres Problem.

Zur zumindest partiellen Lösung des letztgenannten Problems wurde bereits die Verwendung sogenannter Übertragungsbleche vorgeschlagen, die am Absorberelement insbesondere durch Kleben befestigt werden und die Rohrleitungen haltern. Da sich die Elemente im Betrieb stark erwärmen, müssen spezielle und teure Kleber verwendet werden. Zudem sollten Absorberelemente und Übertragungsbleche aus dem gleichen Material sein, um gleiche Wärmeausdehnungskoeffizienten zu besitzen. Aufgrund der thermischen Eigenschaften der bekannten Kleber wirkt eine zwischen Absorberelement und Übertragungsblech vorgesehene Klebschicht allerdings als Isolator und verhält sich damit gerade kontraproduktiv.

### OFFENBARUNG DER ERFINDUNG

Aus Umweltschutzgesichtspunkten ist eine stärkere Nutzung der Sonnenenergie hochgradig wünschenswert. Der Erfindung liegt daher die Aufgabe zugrunde, Bauelemente für eine Solarthermieanlage anzugeben, die mit geringem Kostenaufwand hergestellt und montiert werden können, so daß sich eine damit erstellte Solarthermieanlage innerhalb von kürzester Zeit amortisiert. Dabei soll die Anlage sehr effizient arbeiten und eine hohe Wärmeübertragungsrate zwischen Absorberelement und der oder den Rohrleitung/en für das fluide Medium ggf. unter Verwendung eines oder mehrerer Übertragungsblechs/-bleche erlauben. Ferner soll die Anlage nicht nur leicht montierbar, sondern - falls gewünscht - ohne großen Aufwand auch wieder demontierbar sein.

Der Erfindung liegt auch die Aufgabe zugrunde, ein Verfahren zum Betreiben einer entsprechenden Solarthermieanlage anzugeben, mittels welcher auch bei ungünstigen geographischen und/oder baulichen Bedingungen eine besonders effiziente Nutzung der Anlage möglich wird.

Die Aufgabe wird gelöst von einem Solarbauelement mit den Merkmalen des Anspruchs 1 bzw. des Anspruchs 5, von einer Solarthermieanlage mit den Merkmalen des Anspruchs 8 sowie von Verfahren zum Betreiben einer Solarthermieanlage mit den Merkmalen des Anspruchs 12 bzw. des Anspruchs 14. Der nebengeordnete Anspruch 15 betrifft ein bestimmtes Teil eines erfindungsgemäßen Bauelementes.

Insbesondere wird ein Solarbauelement für Solarthermieanlagen mit einem Absorberelement und wenigstens einem mit dem Absorberelement direkt oder indirekt thermisch gekoppelten Rohr für ein fluides Wärmemedium, vorgeschlagen, bei dem wenigstens eine feste Isolierung vorgesehen ist, die im bestimmungsgemäßen Montagezustand das wenigstens eine Rohr relativ zum Absorberelement fixiert. Dieses Fixieren kann ein direktes sein, d.h. daß die Isolierung das wenigstens eine Rohr direkt gegen das Absorberelement drückt, oder ein indirektes, wobei zwischen Isolierung und Rohr z.B. ein Übertragungsblech angeordnet ist, z.B. ein Übertragungsblech mit einem hutförmigen Querschnitt. Wichtig ist die Idee, die feste Isolierung nicht als passives Element zu verwenden, daß formmäßig an die Gegebenheiten des Solarbauelements angepaßt ist und lediglich zur Isolierung dient, sondern die feste Isolierung aktiv zur Fixierung eines oder mehrerer Rohre relativ zum Absorberelement zu verwenden, und zwar insbesondere durch Verkleben des Absorberelementes mit der Isolierung. Dies bringt eine ganze Reihe von Vorteilen mit sich, die es unter anderem erlauben, die Herstellungskosten drastisch zu senken und vorteilhaft z.B. Absorberelemente zu verwenden, auf die z.B. in Dünnfilmtechnik Photovoltaikelemente aufgebracht sind, worauf nachfolgend noch eingegangen wird.

Die feste Isolierung kann z.B. Kunststoff, wie z.B. einem ausgehärteten Kunststoffschaum, insbesondere aus Polyurethan oder Polyisocyanurat bestehen. Theoretisch ist auch die Verwendung von Holz möglich, jedoch nur dann, wenn es aufgrund der Gegebenheiten am Ort des Einsatzes der Solarbauelemente nicht zu einer so starken Erwärmung in den Solarbauelementen kommt, daß das Holz angegriffen wird. Vorzugsweise besteht die feste Isolierung aus Schaumglas, das sich hinsichtlich Festigkeit, Bearbeitbarkeit und Hitzebeständigkeit als besonders geeignet erwiesen hat.

In die feste Isolierung können eine oder mehrere Rinnen zur Aufnahme eines oder mehrerer Rohre und/oder eines oder mehrerer Übertragungsbleche eingebracht sein. Evtl. Zwischenräume zwischen den Rinnen und dem/den Rohr/en bzw. dem/den Übertragungsblech/en können mit Wärmeleitpaste ausgefüllt werden.

Ist bzw. sind ein oder mehrere Übertragungsblech/e vorgesehen, so kann die feste Isolierung darauf aufgeschäumt oder daran z.B. mittels Klammern (Tackern) oder Schrauben befestigt sein. Es ist auch möglich, Halteprofile zu verwenden, die die Isolierung gegen das Absorberelement vorspannen. Wichtig ist, daß es die feste Isolierung erlaubt, das wenigstens eine Rohr relativ zum Absorberelement zu fixieren, ohne daß Schweißverfahren zum Einsatz kommen müßten. Bei der derzeit als beste Ausführungsform erkannten Lösung wird die feste Isolierung mit dem Absorberelement einfach verklebt.

Auf der dem Absorberelement abgewandten Seite der festen Isolierung kann eine Abdeckung vorgesehen sein. Bei dem Absorberelement kann es sich insbesondere um ein flaches Blech handeln, das auf seiner sonnenzugewandten Seite mit einer lichtabsorbierenden Farbe beschichtet ist. Es kann sich bei dem Absorberelement aber auch um ein oder mehrere Photovoltaik-Element(e) handeln, das bzw. die z.B. auf eine Aluminiumplatte geklebt oder direkt auf eine entsprechende Platte aufgebracht sein kann/können. Solche Elemente werden im Betrieb sehr heiß, so daß sie vorteilhaft sowohl die Funktion eines einfachen Absorberelements für die Solarthermie als auch ihre Funktion der Stromerzeugung übernehmen können. Gleichzeitig übernimmt dann das wenigstens eine Rohr mit dem zirkulierenden fluiden Medium die Funktion der Kühlung des Photovoltaik-Elementes, was vorteilhaft dessen Wirkungsgrad erhöhen kann, da der Wirkungsgrad von solchen Elementen ab einer gewissen Temperatur abnimmt.

Bei einer bevorzugten Ausführungsform ist das Solarbauelement zur Montage auf dem Dachfirst eines Satteldaches ausgebildet. Es kann eine langgestreckte zumindest partiell lichtdurchlässige äußere Abdeckung umfassen, die im bestimmungsgemäßen Montagezustand einen Teil einer Leitung für fluides Wärmemedium abdeckt. Die äußere Abdeckung kann von einer langgestreckten im wesentlichen U-förmigen Kunststoffrinne, alternativ aber auch von einer gespannte Kunststoffolie, insbesondere einer Polycarbonatfolie gebildet werden, wobei dann im letzteren Fall zweckmäßigerweise eine Anzahl im wesentlichen U-förmiger Drahtbügel vorgesehen wird, wobei die Drahtbügel im bestimmungsgemäßen Montagezustand die Kunststoffolie zur Bildung einer U-förmigen äußeren Abdeckung stützen.

Der von der äußeren Abdeckung abgedeckte Teil der Leitung für das fluide Wärmemedium kann zwei im wesentlichen parallele Rohre, insbesondere Kupferrohre, umfassen die an einem Ende miteinander verbunden sind. Vorteilhaft kann dann eine wärmeisolierende Wand vorgesehen werden, die im bestimmungsgemäßen Montagezustand den von der äußeren Abdeckung umschlossenen Raum derart teilt, daß die beiden parallelen Rohre auf unterschiedlichen Seiten der Wand verlaufen. Eine solche Wand kann eine Stützfunktion für die äußere Abdeckung ausüben.

Für die von der äußeren Abdeckung abgedeckten Teile der Leitung für das fluide Wärmemedium kann eine gesonderte Halterung vorgesehen sein, insbesondere in Form eines metallischen Profils, insbesondere eines Aluminiumprofils. Die Halterung kann lichtabsorbierend gestaltet sein und wenigstens eine, vorzugsweise zwei langgestreckte Erwärmungsflächen aufweisen. Die Halterung kann die Leitung für das fluide Wärmemedium zumindest partiell umschließen.

In dem von der äußeren Abdeckung umschlossenen Raum kann im bestimmungsgemäßen Montagezustand wenigstens eine langgestreckte lichtreflektierende Fläche vorgesehen und derart angeordnet sein, daß einfallendes Licht von ihr auf den von der äußeren Abdeckung abgedeckten Teil der Leitung für das Wärmemedium und/oder eine Erwärmungsfläche der Halterung gelenkt wird. Die äußere Abdeckung kann doppelwandig aufgebaut sein.

Sind Halteprofile und/oder eine Halterung vorgesehen, so kann/können diese zumindest partiell lichtabsorbierend gestaltet sein.

Bei einer bevorzugten Ausführungsform ist im bestimmungsgemäßen Montagezustand eine isolierende Schicht vorgesehen ist, die den von der äußeren Abdeckung umschlossenen Raum von einem Dach, insbesondere einem Dachfirst, thermisch trennt.

Bei einer Solarthermieanlage, die wenigstens ein Solarbauelement gemäß der Erfindung aufweist, können vorteilhaft Mittel zum Wechseln der Richtung, in der das fluide Wärmemedium fließt, vorgesehen sein, wobei solche Mittel eine Zeitschaltzeituhr und/oder einen Lichtsensor und/oder einen Temperaturfühler umfassen können.

Bei einer bevorzugten Ausführungsform umfaßt die Solarthermieanlage einen ersten, druckloser Behälter, insbesondere eine Wanne oder ein Sack, für das fluide Wärmemedium, wobei der Behälter einen Teil eines Kreislaufs für das Wärmemedium bildet. In dem ersten Behälter kann ein im bestimmungsgemäßen Montagezustand unter dem örtlichen Wasserleitungsdruck stehender zweiter Behälter für Heizwasser, Frischwasser oder Brauchwasser angeordnet sein.

Die Solarthermieanlage kann ferner Mittel zum Absaugen der in dem von einer Abdeckung über dem Absorberelement umschlossenen Raum vorhandenen erwärmten Luft und Einspeisen dieser erwärmten Luft in eine Heizungsanlage und/oder in einen Wäschetrockener umfassen.

Bei einem erfindungsgemäßen Verfahren zum Betreiben einer Solarthermieanlage, wobei die Anlage auf einem Dach oder einem Dachfirst angeordnet ist und eine Rohrleitung für ein fluides Wärmemedium umfaßt, die aus wenigstens zwei im wesentlichen parallelen Rohren besteht, die an einem Ende miteinander verbunden sind, so daß das Wärmemedium in einer ersten Richtung auf dem Dach oder Dachfirst zu der Verbindungsstelle der beiden parallelen Rohre fließen kann und in einer dazu entgegengesetzten zweiten Richtung zurückfließen kann, ist vorgesehen, daß in Abhängigkeit von dem Sonnenstand die Fließrichtung umgekehrt wird, so daß das Wärmemedium immer in demjenigen Rohr zurückströmt, das eine stärke Sonneneinstrahlung erfährt.

Bei diesem Verfahren kann vorteilhaft vorgesehen werden, daß die in dem von einer Abdeckung über dem Absorberelement umschlossenen Raum vorhandene erwärmte Luft abgesaugt und zum Betreiben einer Heizungsanlage und/oder eines Wäschetrockners genutzt wird.

Weitere Einzelheiten und Vorteile der Erfindung ergeben sich aus der nachfolgenden, rein beispielhaften und nicht-beschränkenden Beschreibung eines Ausführungsbeispiels in Verbindung mit der Zeichnung.

### KURZE BESCHREIBUNG DER ZEICHNUNG

- Fig. 1: zeigt einen stark schematisierten Querschnitt durch einen bei einem Ausführungsbeispiel der Erfindung vorgesehenen Teil einer Solarthermieanlage, der zur Montage auf einem Dachfirst ausgebildet ist.
- Fig. 2: zeigt stark schematisiert einen Schnitt durch einen Behälter mit einer eingespannten Metallfolie als Wanne für eine Kunststoffblase, die als Reservoir für ein Wärmemedium dient, und einen in der Blase angeordneten Behälter für zu erwärmendes Frischwasser.
- Fig. 3: zeigt den Behälter gemäß Fig. 2 in Draufsicht, jedoch ohne Wanne und Kunststoffblase, zur Verdeutlichung der Warmluftabsaugung.
- Fig. 4: zeigt schematisiert einen Ausschnitt eines Querschnitts durch ein bei einem weiteren, nämlich dem derzeit bevorzugten Ausführungsbeispiel der Erfindung vorgesehenes Solarbauelement als Teil einer Solarthermieanlage, das z.B. auf einem Dach montiert wird.
- Fig. 5: zeigt schematisiert einen Ausschnitt eines Querschnitts durch ein weiteres, dem in Fig. 4 gezeigten Solarbauelement sehr ähnliches Solarbauelement, daß ein zusätzliches Rohrsystem zur Kühlung einer Flüssigkeit aufweist.
- Fig. 6: zeigt schematisiert im Querschnitt zwei Solarbauelemente, die als Teile einer Solarthermieanlage unter einer gemeinsamen Abdeckung vorgesehen und ähnlich dem in Fig. 4 gezeigten Solarbauelement ausgebildet, jedoch zur Montage auf einem Dachfirst vorgesehen sind.

### BESCHREIBUNG BEVORZUGTER AUSFÜHRUNGSFORMEN

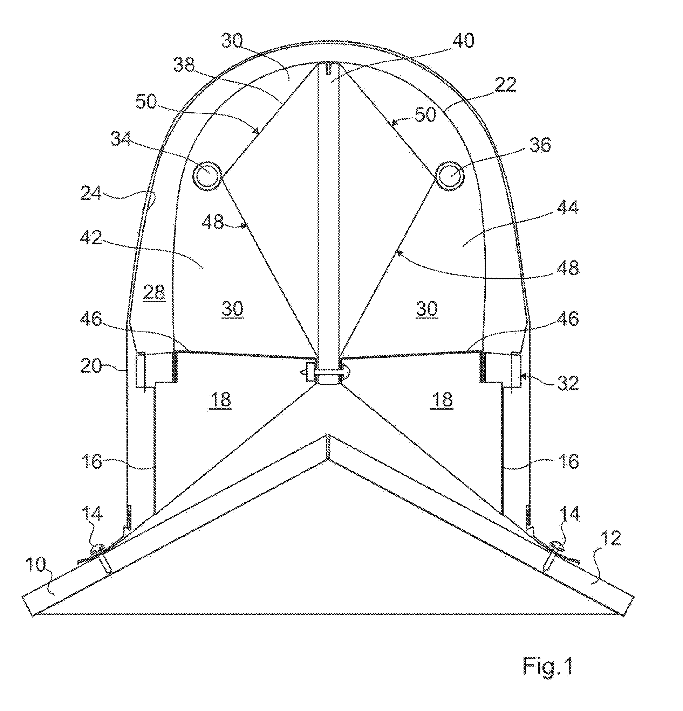

In Fig. 1 zeigt schematisch und rein beispielhaft einen Querschnitt durch den Teil einer erfindungsgemäßen Solarthermieanlage, der bei einem ersten Ausführungsbeispiel auf einem Dach, insbesondere im Bereich des Dachfirstes montiert wird.

Dabei ist in der Zeichnung der Dachfirst durch die beiden plattenförmigen Elemente 10 und 12 angedeutet. An diesen Elementen 10 und 12 sind durch eine Vielzahl von Befestigungselementen 14, z.B. in Form von Nägeln, Schrauben, Nieten o.dgl., von denen im Schnitt hier nur zwei zu sehen sind, zwei langgestreckte Halteprofile 16 befestigt, die eine feste thermische Isolierung 18, bei der sich zum Beispiel um ein oder zwei Schaumstoffprofile handeln kann, partiell umschließen und zur Halterung einer bei diesem Ausführungsbeispiel doppelwandig aufgebauten Abdeckung dienen. Je nach Ausgestaltung des Daches können die Halteprofile auch in anderer geeigneter Weise auf dem Dach befestigt werden, z.B. durch Kleben.

Bei dem gezeigten Ausführungsbeispiel wird die Abdeckung von einer äußeren Abdeckung 20 und einer inneren Abdeckung 22 gebildet, die jeweils zumindest partiell lichtdurchlässig sind und vorzugsweise aus einem Kunststoff, insbesondere einem Polycarbonat bestehen. Sowohl bei der äußeren Abdeckung 20 als auch bei der inneren Abdeckung 22 kann es sich sowohl um steife Bauteile als auch um Folien handeln, die mittels entsprechender Bügel, zum Beispiel nach Art der Drahtbügel 24 gespannt und zur Bildung der gewünschten Form gestützt werden. Auch sind halbsteife Lösungen möglich, die im entspannten Zustand die gezeigte Rinnenform annehmen, sich aber mit einem gewissen Kraftaufwand zusammenrollen und damit leicht transportieren lassen.

Sind Drahtbügel 24 vorgesehen, so können diese aus Stahl bestehen. Es ist jedoch auch möglich, entsprechende Elemente aus anderen Materialen als Draht, insbesondere einem festen Kunststoff herzustellen.

Die innere Abdeckung 22 und die äußere Abdeckung 20, schließen zwischen sich einen luftgefüllten Hohlraum 28 ein, der vorteilhaft zur thermischen Isolierung des von der inneren Abdeckung 22 umschlossenen inneren Raumes 30 dient.

Bei einer bevorzugten Ausführungsform sind die Halteprofile 16 zumindest partiell, nämlich an der mit 32 bezeichneten Außenseite lichtabsorbierend gestaltet, so daß sie sich in diesem Bereich bei Sonneneinstrahlung stärker erwärmen. Die Halteprofile, die vorzugsweise aus Metall hergestellt sind, geben dann die Wärme an den Raum 28 ab, so daß sich die Temperaturdifferenz zwischen dem inneren Raum 30, der wie nachfolgend beschrieben sehr warm wird, und dem Raum 28 verringert, was vorteilhaft die thermische Isolationswirkung im Sinne eines Einschließens der Wärme im Raum 30 erhöht.

In dem von der inneren Abdeckung 22 umschlossenen Raum 30 sind bei diesem Ausführungsbeispiel zwei parallele Rohre 34 und 36 mittels einer Halterung 38 angeordnet, wobei die beiden Rohre an einem hier nicht gezeigten Ende derart miteinander verbunden sind, daß ein fluides Wärmemedium, das durch eines der beiden Rohre zu der Verbindung der beiden Rohre fließt, dann in dem anderen der beiden Rohre in entgegengesetzter Richtung strömt.

Bei diesem Ausführungsbeispiel umschließt die Halterung 38 beide Rohre und ist ansonsten im wesentlichen trapezförmig ausgebildet. Es handelt sich bei der Halterung 38 bei diesem Ausführungsbeispiel um ein einziges metallisches Bauteil. Es ist jedoch auch möglich, an Stelle einer beide Rohre halternden Halterung für jedes Rohr eine gesonderte Halterung vorzusehen.

Die Halterung 38 selbst wird gestützt von einer Trennwand 40, die aus einem thermisch isolierenden Material, zum Beispiel einem Kunststoff, hergestellt ist und den inneren Raum 30 in zwei Hälften 42 und 44 teilt. Der innere Raum 30 wird zum einen von der Innenseite der inneren Abdeckung 22, zum anderen von den Abschnitten 46 der beiden Halteprofile 16 gebildet. Dabei sind die Abschnitte 46 poliert oder mit einem reflektierenden Material beschichtet, so daß durch die Abdeckung fallendes Licht von den Abschnitten 46 auf die Abschnitte 48 der Halterung 38 und die Rohre 34 und 36 beziehungsweise, da bei diesem Ausführungsbeispiel die Rohre 34 und 36 von der Abdeckung 38 umschlossen sind, auf die entsprechenden Abschnitte der Halterung 38 reflektiert wird.

Die äußeren, das heißt der inneren Abdeckung 22 zugewandten Seiten 48 und 50 der Abdeckung 38 sind bei diesem Ausführungsbeispiel vorteilhaft mit einer lichtabsorbierenden Farbe beschichtet, so daß sich die Halterung bei Lichteinfall stark erwärmt. Diese Erwärmung wird dadurch begünstigt, daß die Abschnitte 46 der Halteprofile 16 lichtreflektierend ausgebildet sind. Die Außenseiten der Halterung 38 erfahren daher bei Tageslicht zum einen direkten Sonneneinfall, zum anderen einen indirekten Sonneneinfall (auf die Abschnitte 46 der Halteprofile 16 treffendes Sonnenlicht wird auf die Flächen 48 der Halterungen 38 reflektiert, wobei, wenn die Sonne extrem tief steht, auch eine der Flächen 48 direkt beschienen werden kann).

Die aus einem gut wärmeleitenden Material hergestellte Halterung 38 gibt die Wärme an die ebenfalls aus einem wärmeleitenden Material, insbesondere Kupfer, hergestellten Rohre 34 und 36 ab, so daß ein in den Rohren strömendes fluides Wärmemedium, zum Beispiel Wasser, das bei Eintritt in die Rohrleitungen 34 und 36 unter üblicher Raumtemperatur oder Außentemperatur steht, erwärmt wird.

Um die immer gegebenen Verluste bei der Weiterleitung von Wärme zu minimieren und die Effizienz der Solarthermieanlage zu erhöhen, ist bei diesem Ausführungsbeispiel die Trennwand 40 in dem inneren Raum 30 vorgesehen, die den Raum in zwei Hälften 42 und 44 unterteilt. Steht die Sonne nicht exakt senkrecht über der Anordnung so wird eine der beiden Hälften durch die erhöhte Sonneneinstrahlung immer wärmer als die andere. Die Erfindung sieht nun vor, die Solarthermieanlage mittels geeigneter Umschaltmittel so zu betreiben, daß ein zirkulierendes fluides Wärmemedium immer in derjenigen Hälfte 42 oder 44 des inneren Raumes 30 zurückströmt, die wärmer ist. Dabei kann der Wechsel der Strömungsrichtung manuell oder automatisch, zum Beispiel mittels Zeitschaltuhr und/oder Lichtsensor erfolgen. Unter den Begriff "zurückströmen" wird dabei verstanden, daß das aus einem in Fig. 1 nicht gezeigten Reservoir in eines der Rohre 34 oder 36 gepumpte fluide Wärmemedium wieder zurück zu dem Reservoir strömt, wobei es dann gegenüber dem Austritt aus dem Reservoir erwärmt ist und seine Wärme an einen an sich bekannten Wärmetauscher abgeben kann, wobei die Wärmeabgabe auch direkt in dem Reservoir erfolgen kann, z.B. über einen in dem Reservoir angeordneten Behälter für ein zu erwärmendes Medium, z.B. Frischwasser.

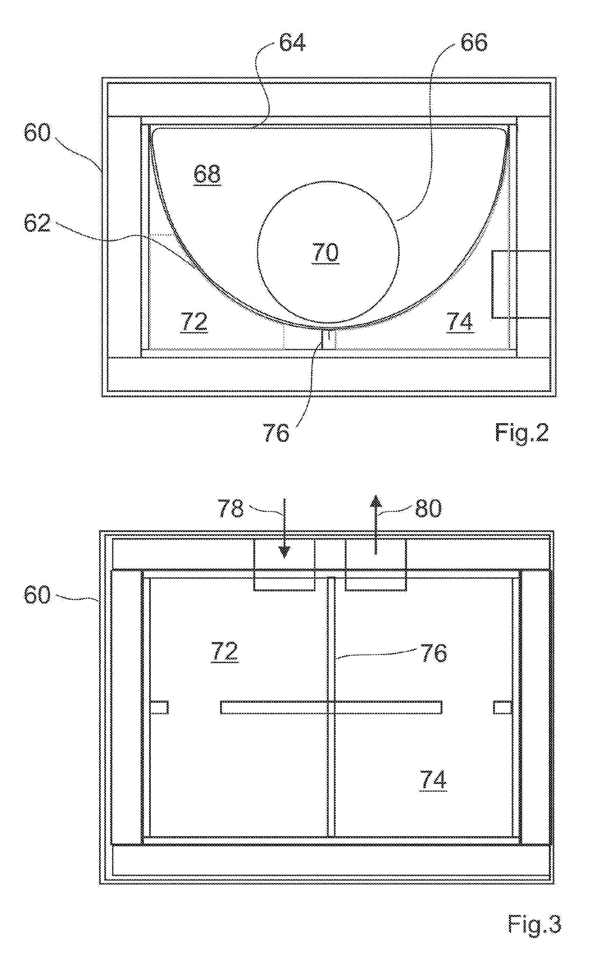

Erfindungsgemäß ist vorgesehen, daß es sich bei dem Reservoir um einen einfachen Behälter, zum Beispiel in Form einer Wanne oder eines Sackes handeln kann. Wenngleich ein gesonderter Wärmetauscher vorgesehen sein kann, sieht eine besondere Ausführungsform der Erfindung vor, daß in dem Behälter für das fluide Wärmemedium ein Behälter für ein zu erwärmendes Medium in der Regel Frisch- oder Brauchwasser, vorgesehen ist. Während das Reservoir drucklos gestellt ist, wird der Behälter für das zu erwärmende Medium üblicherweise unter dem Druck der örtlichen Wasserleitung stehen. Typische Abmessungen können zum Beispiel können sein: Fassungsvermögen des Reservoirs (Behälter) für das fluide Wärmemedium: 200 - 300 Liter, Fassungsvermögen des Behälters für das zu erwärmende Medium (Brauchwasser, Frischwasser): 60 - 70 Liter. Ein Beispiel ist in den Fig. 2 und 3 gezeigt.

Fig. 2 zeigt stark schematisiert einen Schnitt durch einen Behälter 60, bei dem es sich vorteilhaft um den Behälter handeln kann, der auch zur Auslieferung der Anlage benutzt wird. In dem Behälter ist eine Metallfolie 62 gespannt, die zur Stützung einer Kunststoffblase 64 dient, wobei die Blase um einen Behälter 66 für das zu erwärmende Medium angeordnet ist. Die Blase 64 wird dann mit einem Wärmemedium 68, z.B. Wasser, gefüllt, ist aber drucklos gestellt. Die Zirkulation des Wärmemediums durch die Rohre wird durch eine an sich bekannte und hier nicht weiter gezeigte Pumpe gewährleistet. In dem Behälter 66 befindet sich das zu erwärmende Medium 70, insbesondere Frisch- oder Brauchwasser, das üblicherweise unter dem Druck der örtlichen Wasserleitung steht.

Zwischen den Innenseiten des Behälters 60 und der der Blase 64 abgewandten Außenseite der Folie 62 ergeben sich ggf. ineinander übergehende Hohlräume 72 und 74, die bei diesem Ausführungsbeispiel durch einen die Folie 62 stützenden Trennsteg 76 getrennt sind, aber im Luftaustausch miteinander stehen. Im Betrieb wird die in diesen Hohlräumen befindliche Luft warm. Vorteilhaft ist nun vorgesehen, auch die in den Hohlräumen 72 und 74 des Behälters 66 erwärmte Luft zu nutzen, und zwar dadurch, daß hier nicht weiter gezeigte Mittel zum Absaugen der erwärmten Luft und Einspeisen dieser erwärmten Luft in eine Heizungsanlage und/oder einen Wäschetrockener vorgesehen werden. Wie in Fig. 3 durch die Pfeile 78 und 80 angedeutet, kann in die Hohlräume Frischluft eingeblasen und erwärmte Luft abgesaugt werden, wobei natürlich vorgesehen ist, daß die Hohlräume 72 und 74 voneinander nicht hermetisch getrennt, sondern vielmehr so verbunden sind, daß zwischen ihnen ein Luftaustausch insbesondere an einer von der Frischluftzufuhr und der Absaugung der erwähnten Luft möglichst weit entfernten Stelle stattfinden kann.

Dabei sei erwähnt, daß vorteilhaft auch die in dem von der Abdeckung 22 (Fig. 1) umschlossenen Raum erwärmte Luft dadurch genutzt werden kann, daß Mittel zum Absaugen der erwärmten Luft und Einspeisen dieser erwärmten Luft in eine Heizungsanlage und/oder in einen Wäschetrockener vorgesehen werden.

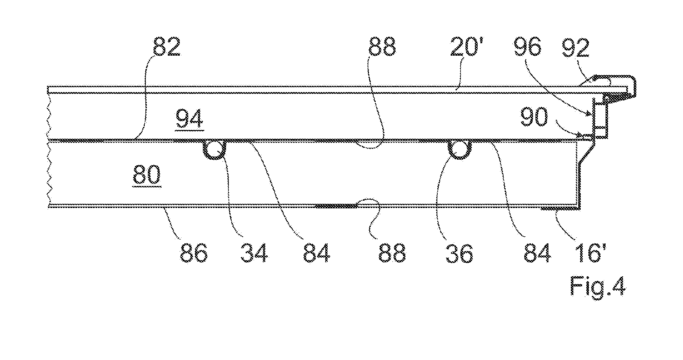

In der Fig. 4 ist ein Ausschnitt eines schematisierten Querschnitts durch ein bei einem weiteren, nämlich dem derzeit bevorzugten Ausführungsbeispiel der Erfindung vorgesehenes Bauelement einer Solarthermieanlage im Querschnitt gezeigt, das z.B. auf einem Dach montiert werden kann und das im folgenden als "Solarbauelement" bezeichnet wird.

Das Solarbauelement kann vorgefertigt ausgeliefert oder vor Ort zusammengesetzt werden und entspricht wirkungsmäßig dem in Fig. 1 gezeigten Teil. Das Solarbauelement umfaßt bei dem gezeigten Ausführungsbeispiel eine lichtdurchlässige Abdeckung 20', die von Halteprofilen 16', von denen hier nur eines gezeigt ist, gehalten wird, Rohre, von denen hier zwei gezeigt sind, nämlich die Rohre 34 und 36, eine feste Isolierung 80, die bevorzugt aus Schaumglas besteht, aber z.B. auch aus einem Kunststoffschaum, insbesondere Polyisocyanurat oder Polyurethan bestehen kann, ein Absorberelement 82, Übertragungsbleche 84 und, bei diesem Ausführungsbeispiel, eine untere (auf der im bestimmungsgemäßen Montagezustand unteren Seite der Isolierung 80 vorgesehene) Abdeckung 86. Wie oben erwähnt sind die Übertragungsbleche optional.

Das Absorberelement 82 und das Übertragungsblech 84 bestehen jeweils aus einem geeigneten Material, insbesondere einem Metallblech, und sind auf der der Abdeckung 20' zugewandten Oberseite der Isolierung angeordnet. Dabei sei an dieser Stelle betont, daß hier der Terminus "Blech" gemäß üblichem Sprachgebrauch gewählt wurden, ohne damit zum Ausdruck bringen zu wollen, daß es sich dabei zwingend um ein Metallteil handeln muß.

Bei dem gezeigten Ausführungsbeispiel ist das Absorberelement ein flaches Blech, das auf seiner sonnenzugewandten Seite mit einer lichtabsorbierenden Farbe beschichtet ist. Besonders vorteilhaft kann sich bei dem Absorberelement aber auch um ein oder mehrere Photovoltaik-Element(e) handeln, das bzw. die z.B. auf eine Edelstahl- oder Aluminiumplatte geklebt oder direkt auf einen geeigneten Träger aufgebracht sein kann/können. Beispielsweise ermöglicht es die Erfindung, auf einer Trägerplatte z.B. aus Edelstahl oder Aluminium in Dünnfilmtechnik Photovoltaikelemente auszubilden oder Siliziumphotovoltaikelemente auf einer solchen Trägerplatte anzuordnen und die so ausgebildete Platte dann in besonders einfacher Weise als Absorberelement zu verwenden, da die Rohre 34, 36 für das Wärmemedium dank der Erfindung nicht mehr mit dem Absorberelement 82 verschweißt werden müssen, wodurch die Photovoltaikelemente beschädigt werden könnten, sondern durch Verkleben der festen Isolierung mit dem Absorberelement relativ zum Absorberelement fixiert werden können. Je nach Ausgestaltung der Photovoltaikelemente können diese nicht nur Teil des Absorberelementes sein, sondern das Absorberelement bilden.

Die Rohre 34 und 36 sind bei dem gezeigten Ausführungsbeispiel mittels jeweils eines Übertragungsblechs 84 thermisch mit dem Absorberelement 82 gekoppelt. Sie können jedoch auch ohne Übertragungsbleche thermisch mit dem Absorberelement gekoppelt sein. Beispielsweise kann bei Rohren mit kreisförmigem Querschnitt vorgesehen sein, daß zur Auffüllung der zwischen den Rohren, den in die feste Isolierung eingebrachten Aufnahmen für die Rohre und dem Absorberelement verbleibenden Hohlräume Wärmeleitpaste verwendet wird. Die Rohre können aber auch einen eckigen, insbesondere rechteckigen Querschnitt besitzen, so daß sie eine Außenseite mit relativ großer Oberfläche besitzen, die an dem Absorberelement anliegt.

Die feste Isolierung 80 kann auf ihrer der Seite mit dem Absorberelement 82 abgewandten Seite mit einer Abdeckung 86, z.B. einer Kunststoffplatte versehen sein.

Die Tatsache, daß sich Absorberelement und Übertragungsbleche in direktem Kontakt befinden, ohne miteinander verklebt oder verschweißt zu sein, ermöglicht auch eine besonders gute Wärmeübertragung zwischen dem Absorberelement und den Übertragungsblechen. Da die Übertragungsbleche formmäßig an die Rohre angepaßt sind, so daß sich eine große Kontaktfläche zwischen den Übertragungsblechen und den Rohren ergibt, ist auch eine sehr gute Wärmeübertragung von den Absorberelementen auf die Rohre gewährleistet, so daß die Erfindung besonders effizient arbeitet. Wie oben erwähnt, können die Rohre auch so gestaltet werden, daß sie selbst eine relativ große Fläche besitzen, die in direkten Kontakt mit dem Absorberelement kommen kann; insbesondere können die Rohre einen rechteckigen Querschnitt besitzen.

Die gezeigte Anordnung läßt sich vorteilhaft in besonders einfacher, schneller und kostengünstiger Weise dadurch montieren, daß Absorberelement 82 und die ggf. vorgesehene Abdeckung 86 an einigen Stellen 88 mit einem geeigneten Klebstoff auf die feste Isolierung 80 aufgeklebt werden, in deren Ausnehmungen zuvor die Rohre eingebracht wurden. Dabei schaden unterschiedliche Wärmeausdehnungskoeffizienten zwischen Absorberelement und fester Isolierung nicht, da zum einen nicht vollflächig verklebt wird und zum anderen die Isolierung und ggf. auch der Kleber in Maßen elastisch ist. Als Kleber kommt z.B. ein Hochtemperatursilikon in Frage, was auch den Vorteil einer im Verhältnis zu Spezialklebern leichten Verarbeitbarkeit besitzt.

Das gezeigte Solarbauelement umfaßt ferner ein Halteprofil 16', das das Absorberelement 82, die obere Abdeckung 20' und die rückwärtige Abdeckung 86 an den Außenseiten mittels entsprechender an dem Halteprofil 16' angeformter Profilvorsprüngen einfaßt. Dabei kann zwischen dem entsprechenden Profilvorsprung und dem Absorberelement 82 ein Dämpfungs- und Dichtstreifen 90 vorgesehen sein, ebenso wie ein solcher Streifen 92 auch zwischen dem Halteprofil 16' und der Abdeckung 20' angeordnet werden kann.

Die feste Isolierung 80 ermöglicht es, daß das Absorberelement 82 in direkten Kontakt mit den Übertragungsblechen kommt und das entsprechende Solarbauelement aus Absorber, ggf. vorgesehenen Übertragungsblechen, fester Isolierung und Rohren besonders schnell und kostengünstig hergestellt werden kann. Bekannte Solarbauelemente verwenden dagegen meist Isolierungen aus Stoffen wie Steinwolle, die keine Trag- und Stützfunktion ausüben können.

Die im bestimmungsgemäßen Montagezustand feste Isolierung kann auf verschiedene Weisen hergestellt werden, z.B. als vorgefertigter Block aus Polyurethan oder insbesondere Polyisocyanurat. Als besonders geeignet hat sich jedoch Schaumglas erwiesen. Dabei ist es sowohl möglich, rinnenförmige Aufnahmen für die Übertragungsbleche und die Rohre in den Block direkt beim Herstellen eines solchen Blocks durch Verwendung einer entsprechenden Form einzubringen als auch nachträglich in den Block einzuarbeiten, z.B. durch Fräsen.

Die feste Isolierung kann aber auch durch Ausschäumen eines zwischen den Unterseiten der Übertragungsbleche 84 und des Absorberelements 82, der Oberseite der unteren Abdeckung 86 und den Innenseiten der Halteprofile 16' gebildeten Hohlraums erzeugt werden, wobei z.B. so vorgegangen werden kann, daß Abstandshalter zwischen Abdeckung 86 und Absorberelement 82 sowie zwischen Absorberelement 82 und der zumindest partiell lichtdurchlässigen Abdeckung 20' angeordnet werden, die die Teile zwischen den Halteprofilen 16' dann fest miteinander verspannen, so daß der sich dann ergebende in Fig. 4 untere Hohlraum ausgeschäumt werden kann. In diesem Zusammenhang sei erwähnt, daß auch die sich in dem oberen Hohlraum 94 befindende Luft, die im Betrieb der Anlage erwärmt wird, wie oben im Zusammenhang mit der Fig. 1 beschrieben abgesaugt und zur Erwärmung genutzt, z.B. einem Wäschetrockner zugeführt werden kann. Alternativ kann der gezeigte Hohlraum auch ganz entfallen, insbesondere wenn Photovoltaik-Elemente die Funktion des Absorberelements übernehmen. In diesem Fall sind dann die Photovoltaik-Elemente über den Rohren, die das für die Solarthermie genutzte fluide Medium führen, angeordnet, und beide werden von der festen Isolierung gestützt bzw. in ihrer Position zueinander fixiert.

Die erwähnten Abstandshalter können auch gewährleisten, daß sich eine feste Anlage und damit eine gute thermische Kopplung zwischen den im Querschnitt hutförmigen Übertragungsblechen 84 und dem Absorberelement 82 ergeben. In jedem Fall ist eine direkte Anlage des Absorberelements an den Übertragungsblechen gewährleistet.

Die Halteprofile 16' können zumindest auf ihren dem Hohlraum 94 zugewandten Abschnitten 96 mit einer lichtabsorbierenden Farbe beschichtet sein, wodurch sich der Wirkungsgrad weiter erhöht.

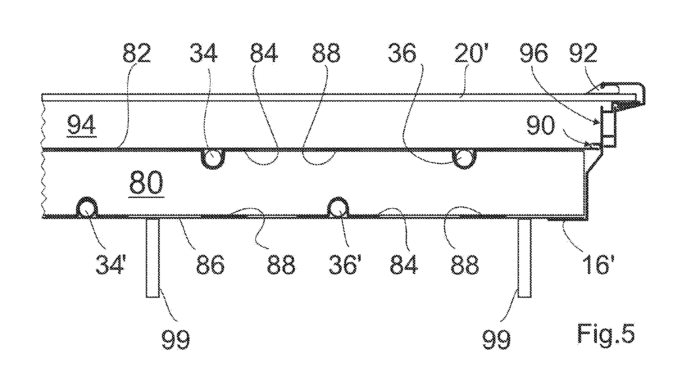

In der Fig. 5 ist ein Ausschnitt eines schematisierten Querschnitts durch ein bei einem weiteren Ausführungsbeispiel der Erfindung vorgesehenes Bauelement einer Solarthermieanlage im Querschnitt gezeigt, das z.B. auf einem Dach montiert werden kann und das im folgenden, wie das in Fig. 4 gezeigte Bauelement, als "Solarbauelement" bezeichnet wird.

Das Solarbauelement gemäß Fig. 5 entspricht weitestgehend dem in Fig. 4 gezeigten, weshalb für Teile, die die gleiche Funktion haben, wie die entsprechenden Teile bei dem in Fig. 4 gezeigten Ausführungsbeispiel, auch die in Fig. 4 verwendeten Bezugszeichen verwendet wurden.

Das Solarbauelement gemäß Fig. 5 wird mit nur schematisch dargestellten Montageelementen 99 in einem Abstand von üblicherweise etwa 3-6 cm zu einem Dach montiert und weist ggü. dem Solarbauelement ein zweites System von Rohren, von denen hier zwei gezeigt sind, nämlich die Rohre 34' und 36', auf, die auf der dem Absorberelement 82 abgewandten Seite der festen Isolierung 80 eingelassen und mit mittels Übertragungsblechen 84 mit der unteren Abdeckung 86 thermisch gekoppelt sind. Das zweite Rohrsystem dient vorteilhaft dazu, eine warme Flüssigkeit, z.B. aus einer Klimaanlage, zirkulieren und dabei abkühlen zu lassen. Damit wird in einfacher Weise ein großer Nutzen erzielt. Beispielsweise kann die Solarthermieanlage dann so betrieben werden, daß nachts ein warmes Medium, z.B. Wasser, aus einem Tank in dem zweiten Rohrsystem zirkuliert wird, um das Medium auf eine Außentemperatur von z.B. 17 °C abzukühlen. Das Medium kann dann tagsüber anstelle von z.B. 35 °C warmer Umgebungsluft zur Kühlung beim Betrieb einer Klimaanlage verwendet werden.

Die Montageelemente 99 verhindern einen direkten Kontakt der Solarbauelemente mit dem Dach, so daß nicht unnötig viel Wärme über das Dach an das Innere eines Gebäudes abgegeben wird, das womöglich aufgrund der Witterungsbedingungen gekühlt wird. Zudem kann dank der Montageelemente 99 gerade dann, wenn das Dach, auf dem die Solarbauelemente montiert sind, eine Neigung aufweist, beim Betreiben des zweiten Rohrsystems zum Kühlen eines Medium ein Kamineffekt entstehen, so daß die zwischen dem Dach und den Solarbauelementen befindliche erwärmte Luft schnell nach oben abtransportiert und kühle Luft von unten nachsteigen kann, was die Effizienz der Anlage erhöht. Der Kühleffekt kann noch dadurch gesteigert werden, daß die wärmeabgebende Seite der Solarbauelemente in bestimmten Zeitintervallen automatisch oder sensorgesteuert leicht mit Wasser besprüht wird, das dann auf den Solarbauelementen verdunstet und diesen dabei Verdunstungswärme entzieht.

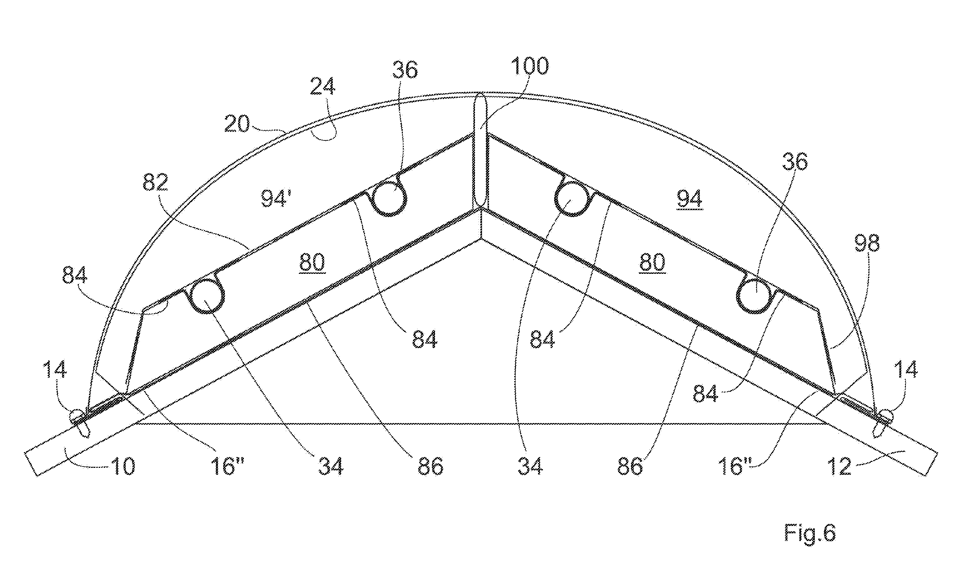

In der Fig. 6 ist im Querschnitt schematisiert gezeigt, wie zwei Solarbauelemente, die für sich ähnlich dem in Fig. 4 gezeigten Solarbauelement sind, zur Montage auf einem Dachfirst ausgestaltet werden können.

Dabei ist in der Zeichnung der Dachfirst durch die beiden plattenförmigen Elemente 10 und 12 angedeutet. An diesen Elementen 10 und 12 sind durch eine Vielzahl von Befestigungselementen 14, z.B. in Form von Nägeln, Schrauben, Nieten o.dgl., von denen im Schnitt hier nur zwei zu sehen sind, zwei langgestreckte Halteprofile 16" befestigt, die zur Halterung einer bei diesem Ausführungsbeispiel einwandig ausgebildeten Abdeckung 20 dienen. Wie bereits im Zusammenhang mit Fig. 1 erwähnt, können die Halteprofile je nach Ausgestaltung des Daches auch in anderer geeigneter Weise auf dem Dach befestigt werden, z.B. durch Kleben.

Die Abdeckung 20 ist zumindest partiell lichtdurchlässig und besteht vorzugsweise aus einem Kunststoff, insbesondere einem Polycarbonat. Zur Stützung der Abdeckung 20 sind entlang des Dachfirstes in Abständen Drahtbügel 24 vorgesehen, ähnlich wie im Zusammenhang mit Fig. 1 erwähnt. Die Abdeckung ist bei diesem Ausführungsbeispiel so ausgebildet, daß sie zwei Solarbauelemente ähnlich dem in Fig. 4 gezeigten Solarbauelement umfaßt. Die Abdeckung 20 schließt einen luftgefüllten Hohlraum ein, der z.B. mittels eines Trennsteges 100 in zwei Hohlräume 94 und 94' geteilt wird, von denen sich der eine auf der sonnenzugewandten Seite befindet und damit wärmer wird als der andere. Aus einem oder beiden Hohlräumen kann ggf., wie oben beschrieben, erwärmte Luft abgesaugt und z.B. einem Wäschetrockner zugleitet werden.

Die weiteren in Fig. 6 gezeigten Teile, insbesondere die festen Isolierungen 80, die beiden Absorberelemente 82, die Übertragungsbleche 84 und die unteren Abdecklungen 86 entsprechen im wesentlichen den in Fig. 4 gezeigten Bauteilen, wobei sie formmäßig an die Montage im Bereich des Dachfirstes angepaßt sind und aufgrund der gemeinsamen Abdeckung 20 auf einzelne Abdeckungen wie die Abdeckung (20' in Fig. 4) verzichtet werden kann. Insbesondere sind die dem Dachfirst abgewandten Endabschnitte 98 der Absorberelemente so weit um die jeweilige feste Isolierung gebogen, daß auch bei tiefstehender Sonne noch Licht auf sie fällt.

Im Rahmen des Erfindungsgedankens sind zahlreiche Abwandlungen und Weiterbildungen möglich. So kann z.B. anstelle der in Fig. 1 gezeigten doppelwandigen Abdeckung auch eine drei- und mehrwandige oder, wie in Fig. 4 gezeigt, eine einwandige Abdeckung vorgesehen sein. Die in Fig. 1 gezeigte rinnenförmige Abdeckung kann auch durch ein einfaches Kunststoffrohr gebildet werden.

Die Erfindung besitzt viele Vorteile. Sie kann mit einfachsten Bauteilen hergestellt werden und läßt sich leicht auch von technischen Laien nachrüsten. Beispielsweise kann ein über Baumärkte oder im Versandhandel vertriebener Bausatz vorgesehen sein, der in einer Kiste die wichtigsten Teile der Solarthermieanlage umfaßt. Die oben erwähnten Kupferrohre und die langgestreckten Halteprofile, aber auch die gegebenenfalls steifen Abdeckungen, falls diese nicht ohnehin faltbar sind, sowie die Halterungen können jeweils geteilt sein, so daß sie zur Bildung einer langen, z.B. über den gesamten Dachfirst bzw. die gesamte Dachbreite verlaufenden Anordnung aneinander gesetzt werden können, gleichzeitig aber leicht zu verpacken sind. Die Kiste kann dann mit einem Sack oder einer Folie ausgelegt werden, so daß sie als Reservoir für ein fluides Wärmemedium, in der Regel Wasser, dienen kann. Mitgeliefert werden dann noch ein Behälter für das zu erwärmende Medium, der zum Beispiel mittels Schlauch oder Rohrleitungen in ein vorhandenes Wasserleitungssystem eingebunden werden kann, und ggf. eine Pumpe, um das Wärmemedium in Umlauf zu versetzen. Eine beispielhafte Anordnung der erfindungsgemäßen Solarthermieanlage könnte dann so aussehen, daß auf dem Dachboden die Verpackungskiste aufgestellt und die Folie für das Wärmemedium in der Kiste gespannt wird, worauf der Behälter für das zu erwerbende Medium in Kiste angeordnet und in ein vorhandenes Wasserleitungssystem mittels entsprechender Schläuche oder Rohre eingebunden wird. Die Kiste wird dann mit Wasser befüllt. Schlauch- oder Rohrleitungen führen unter Zwischenschaltung einer kleinen Pumpe zu den Rohren 34 und 36, die auf dem Dach bzw. Dachfirst angeordnet sind. Wärmemedium wird dann im Betrieb der Anlage vom Dachboden auf den Dachfirst in die Rohrleitungen gepumpt und durchläuft die Rohre 34 und 36, wobei wie oben bereits beschrieben ggf. die Fließrichtung in Abhängigkeit vom Sonnenstand gewechselt werden kann. Das im Reservoir vorhandenen Wärmemedium wird erwärmt und gibt einen Teil seiner Wärme an das in dem Behälter für das zu erwärmende Medium befindliche Frisch-oder Brauchwasser ab.

Die Anlage ist leicht zu montieren und zu demontieren. Sie ist extrem kostengünstig herstell- und lieferbar. Unabhängig davon, ob das Dach große, der Sonnen zugewandte Flächen besitzt, läßt sich die Anlage auf Grund ihrer Ausgestaltung dennoch wirtschaftlich betreiben, sofern das Dach überhaupt ein der Sonne ausgesetzten Abschnitt aufweist. Die kostengünstige Herstell- und Lieferbarkeit der Anlage bewirkt, daß sich eine Anschaffung auch für solche Hausbesitzer lohnt, die bereits wissen, daß sie ihr Haus nach wenigen Jahren wieder verkaufen möchten. Im Falle des Verkaufs eines mit einer solchen Anlagen ausgerüsteten Hauses kann, wenn der Käufer nicht bereit ist, einen entsprechenden Mehrpreis für das Haus zu bezahlen, die Anlage leicht demontiert und vom Verkäufer des Hauses mitgenommen werden. Die Anlage erhöht damit stark den Anreiz, erneuerbare Energie, hier in Form von Sonnenenergie, zu nutzen und trägt damit zum Umweltschutz bei.

## Patentansprüche

1. Solarbauelement für Solarthermieanlagen mit einem Absorberelement und wenigstens einem mit dem Absorberelement direkt oder indirekt thermisch gekoppelten Rohr für ein fluides Wärmemedium,
**dadurch gekennzeichnet,**
**daß** wenigstens eine feste Isolierung vorzugsweise aus Schaumglas oder Kunststoff, insbesondere einem ausgehärteten Kunststoffschaum, insbesondere aus Polyurethan oder Polyisocyanurat, vorgesehen ist, die im bestimmungsgemäßen Montagezustand das wenigstens eine Rohr relativ zum Absorberelement fixiert.

2. Solarbauelement nach Anspruch 1, **dadurch gekennzeichnet, daß** das Absorberelement an die feste Isolierung geklebt ist.

3. Solarbauelement nach Anspruch 1 oder 2, **dadurch gekennzeichnet, daß** wenigstens ein Übertragungsblech zur Aufnahme und thermischen Kopplung des wenigstens eine Rohres mit dem Absorberelement vorgesehen ist.

4. Solarbauelement nach einem der Ansprüche 1 bis 3, **dadurch gekennzeichnet, daß** auf der dem Absorberelement abgewandten Seite der wenigstens einen festen Isolierung wenigstens ein Rohr für ein zu kühlendes fluides Wärmemedium vorgesehen ist.

5. Solarbauelement insbesondere nach einem der Ansprüche 1 bis 4, **dadurch gekennzeichnet, daß** es zur Montage auf dem Dachfirst eines Satteldaches ausgebildet ist.

6. Solarbauelement nach einem der Ansprüche 1 bis 7, **dadurch gekennzeichnet daß** es eine langgestreckte zumindest partiell lichtdurchlässige äußere Abdeckung, insbesondere in Form einer langgestreckten im wesentlichen U-förmigen Kunststoffrinne umfaßt, die im bestimmungsgemäßen Montagezustand einen Teil einer Leitung für fluides Wärmemedium abdeckt.

7. Solarbauelement nach einem der Ansprüche 1 bis 12, **dadurch gekennzeichnet, daß** es ein Photovoltaik-Element, insbesondere ein Photovoltaikelement, das Teil des Absorberelementes ist oder das Absorberelement bildet, umfaßt.

8. Solarthermieanlage, **dadurch gekennzeichnet, daß** sie wenigstens ein Solarbauelement nach einem der Ansprüche 1 bis 7 aufweist.

9. Solarthermieanlage nach Anspruch 8, **dadurch gekennzeichnet, daß** Mittel zum Wechseln der Richtung, in der das fluide Wärmemedium fließt, vorgesehen sind, wobei die besagten Mittel vorzugsweise eine Zeitschaltzeituhr und/oder einen Lichtsensor und/oder einen Temperaturfühler umfassen.

10. Solarthermieanlage nach einem der Ansprüche 8 oder 9, **dadurch gekennzeichnet, daß** ein druckloser erster Behälter, insbesondere eine Wanne oder ein Sack, für das fluide Wärmemedium vorgesehen ist, wobei der erste Behälter einen Teil eines Kreislaufs für das Wärmemedium bildet, wobei in dem ersten Behälter vorzugsweise ein im bestimmungsgemäßen Montagezustand unter dem örtlichen Wasserleitungsdruck stehender zweiter Behälter für Frischwasser oder Brauchwasser oder Heizwasser angeordnet ist.

11. Solarthermieanlage nach einem der Ansprüche 8 bis 10, **dadurch gekennzeichnet, daß** Mittel zum Absaugen der in dem von einer Abdeckung über dem Absorberelement umschlossenen Raum vorhandenen erwärmten Luft und Einspeisen dieser erwärmten Luft in eine Heizungsanlage und/oder in einen Wäschetrockener vorgesehen sind.

12. Verfahren zum Betreiben einer Solarthermieanlage nach einem der Ansprüche 8 bis 11, wobei die Anlage auf einem Dach oder einem Dachfirst angeordnet ist und eine Rohrleitung für ein fluides Wärmemedium umfaßt, die aus wenigstens zwei im Wesentlichen parallelen Rohren besteht, die an einem Ende miteinander verbunden sind, so daß das Wärmemedium in einer ersten Richtung auf dem Dach oder Dachfirst zu der Verbindungsstelle der beiden parallelen Rohre fließen kann und in einer dazu entgegengesetzten zweiten Richtung zurückfließen kann, **dadurch gekennzeichnet, daß** in Abhängigkeit von dem Sonnenstand die Fließrichtung umgekehrt wird, so daß das Wärmemedium immer in demjenigen Rohr zurückströmt, das eine stärke Sonneneinstrahlung erfährt.

13. Verfahren nach Anspruch 12, **dadurch gekennzeichnet, daß** die in dem von einer Abdeckung über dem Absorberelement umschlossenen Raum vorhandene erwärmte Luft abgesaugt und zum Betreiben einer Heizungsanlage und/oder eines Wäschetrockners genutzt wird.

14. Verfahren zum Betreiben einer Solarthermieanlage, wobei die Anlage Solarbauelemente gemäß Anspruch 4 umfaßt, **dadurch gekennzeichnet, daß** ein zu kühlendes fluides Wärmemedium durch wenigstens ein auf der dem Absorberelement abgewandten Seite der wenigstens einen festen Isolierung vorgesehenes Rohr geleitet wird.

15. Feste Isolierung für ein Solarbauelement für Solarthermieanlagen mit einem Absorberelement und wenigstens einem mit dem Absorberelement direkt oder indirekt thermisch gekoppelten Rohr für ein fluides Wärmemedium, wobei die feste Isolierung vorzugsweise aus Schaumglas oder Kunststoff, insbesondere einem ausgehärteten Kunststoffschaum, insbesondere aus Polyurethan oder Polyisocyanurat, besteht
**dadurch gekennzeichnet,**
**daß** die feste Isolierung derart ausgebildet ist, daß sie im bestimmungsgemäßen Montagezustand das wenigstens eine Rohr relativ zum Absorberelement fixiert.
